# EUROPEAN PATENT SPECIFICATION

(11) **EP 3 646 239 B1**
(45) Date of publication and mention of the grant of the patent: **15.11.2023**
(21) Application number: 18822590.8
(22) Date of filing: 21.06.2018
(51) Int. Cl.: G06K 19/00

(54) **FINGERPRINT SENSOR MODULE COMPRISING ANTENNA AND METHOD FOR MANUFACTURING A FINGERPRINT SENSOR MODULE**
FINGERABDRUCKSENSORMODUL MIT ANTENNE UND VERFAHREN ZUR HERSTELLUNG EINES FINGERABDRUCKSENSORMODULS
MODULE DE CAPTEUR D'EMPREINTE DIGITALE COMPRENANT UNE ANTENNE ET PROCÉDÉ DE FABRICATION D'UN MODULE DE CAPTEUR D'EMPREINTE DIGITALE

(30) Priority: 28.06.2017 SE 1750836
(43) Date of publication of application: 06.05.2020
(73) Proprietor: Fingerprint Cards Anacatum IP AB, 411 19 Göteborg (SE)
(72) Inventor: JIANG, Di, 423 51 Torslanda (SE); LUNDAHL, Karl, 413 21 Göteborg (SE); KHAN, Hadayat, 587 52 Linköping (SE)
(74) Representative: Kransell & Wennborg KB
(86) International application number: PCT/SE2018/050673
(87) International publication number: WO 2019/004905

(56) References cited:
- EP-A1- 3 432 221
- WO-A1-2005/096214
- CN-A- 105 654 167
- CN-U- 203 825 641
- CN-U- 205 621 019
- DE-A1-102009 051 704
- DE-A1-102009 051 704
- GB-A- 2 541 036
- KR-B1- 101 387 731
- KR-B1- 101 730 138
- US-A1- 2003 072 475
- US-A1- 2004 061 324
- US-A1- 2005 146 006
- US-A1- 2006 072 355
- US-A1- 2008 223 925
- US-A1- 2009 153 297
- US-A1- 2011 175 702
- US-A1- 2013 200 907
- US-A1- 2015 379 250
- US-A1- 2017 116 453
- US-A1- 2017 116 505
- US-A1- 2017 126 672

## Description

### Field of the Invention

The present invention relates to a fingerprint sensor module comprising an embedded antenna and to a method for manufacturing such a fingerprint sensor module.

### Background of the Invention

As the development of biometric devices for identity verification, and in particular of fingerprint sensing devices, has lead to devices which are made smaller, cheaper and more energy efficient, the possible applications for such devices are increasing. Fingerprint sensing in particular has been adopted in more and more applications such as consumer electronic devices and smart cards due to small form factor, relatively beneficial cost/performance factor and high user acceptance.

In particular, fingerprint sensor integration in smart cards is increasingly requested by the market. However, the requirements of the fingerprint sensor in a smart card may be different compared to when the sensor is used in a smartphone. For example, since the cost of a smart card is significantly lower than the cost of smartphone, it is even more desirable to reduce the cost of the fingerprint sensor for a smart card. Moreover, the access to power may be more limited in a smart card compared to in a smartphone.

Accordingly, it is desirable with improved and efficient integration of a fingerprint sensor in smart cards.

US 2008/0223925 A1 describes an authentication card including a substrate, a sensor module, a wireless transceiver module, and a power circuit.

US 2015/0379250 A1 describes a high security identification card including an on-board sensor for capturing live biometric data.

US 2004/0061324 A1 describes an intelligent label, comprising a substrate with a radio frequency transponder coupled by wiring or other conductive material to a fingerprint sensor system.

### Summary

In view of above-mentioned and other drawbacks of the prior art, it is an object of the present invention to provide an improved fingerprint sensor module for integration in a smart card.

The invention is defined by the independent claims. Preferred embodiments are set out in the dependent claims.

The fingerprint sensor module can be considered to comprise the fingerprint sensor device and a package structure at least partially enclosing the fingerprint sensor device. The sensing array of the fingerprint sensor device is an array comprising a plurality of individual sensing elements, also referred to as pixels. In a capacitive fingerprint sensing device, each sensing element comprises an electrically conductive plate and associated sensing and readout circuitry for detecting a capacitive coupling between each sensing element and a finger placed on a sensing surface of the fingerprint sensor module. It should however be noted that various embodiments of the present invention are equally applicable for other types of fingerprint sensor technologies, such as optical, thermal and ultrasonic fingerprint sensor devices.

The opening of the substrate is configured to receive and hold the fingerprint sensor device and the shape and size of the opening typically mirrors the shape and size of the fingerprint sensor module.

The antenna may advantageously be an RFID (Radio-frequency identification) antenna configured to communicate with a corresponding RFID device and also to provide power to the fingerprint sensor module by harvesting energy from radio waves transmitted by an RFID reader. Thereby, a fingerprint sensor module can be provided with power without the need for an external power supply. The antenna may for example be an NFC (Near-field communication) antenna configured according to existing standards for near field communication.

The present invention is based on the realization that a fingerprint sensor module comprising an embedded antenna provides additional functionality of the fingerprint sensor module and also more efficiently utilizes the area of the module.

Moreover, for a fingerprint sensor module integrated in a smart card, the antenna may enable the fingerprint sensor device to be powered up, using the energy collected from the embedded antenna, without waiting for the power supply from a controller chip of the smart card. If the antenna is only intended for energy collection, it will only act as a receiver, not a transmitter. An antenna acting as only a receiver will also simplify the antenna design. By using such an embedded antenna, the fingerprint sensor device can be powered up and initialized before the controller chip is of the smart card ready to communicate with the sensor chip. Also, for a fingerprint sensor module provided as an all-in-one solution, the need to fabricate another antenna on the smart card may be eliminated, which simplifies the card manufacture process.

According to one embodiment of the invention, the antenna may be arranged to encircle the opening comprising the fingerprint sensor device. The antenna may advantageously encircle the fingerprint sensor device, where the antenna performs a plurality of loops around the fingerprint sensor device. Thereby, the fingerprint sensor device is located within the antenna loop, which provides more efficient area utilization of the fingerprint sensor module. The specific configuration of the antenna, such as the size of the antenna and the number of loops, can be decided based in the intended application for the fingerprint sensor module.

According to one embodiment of the invention the antenna may be arranged below the fingerprint sensor device, on a side of the fingerprint sensor device opposite the side comprising the sensing array. For an antenna arranged below the fingerprint sensor device, the minimum size of the antenna is not restricted by the size of the fingerprint sensor device. Accordingly, it is possible to form an antenna having a smaller footprint area if the antenna is arranged below the fingerprint sensor device. Even though an antenna arranged below the fingerprint sensor device may be shielded by the fingerprint sensor device to some degree, the strength of the signal reaching the antenna may still be sufficient, especially so if the signal does not have to propagate through the fingerprint sensor device.

According to one embodiment of the invention, the substrate may comprise a plurality of conductive layers, wherein the antenna is formed in the plurality of conductive layers of the substrate. Thereby, additional degrees freedom is provided when designing the antenna. In particular, arranging the antenna in multiple layers facilitates tuning impedance, efficiency, Q-factor and frequency range of the antenna. The substrate may for example comprise up to 20 layers of conductive material to be used for the antenna design.

According to one embodiment of the invention, the substrate may be a laminate substrate comprising a plurality of carrier layers interspaced with a plurality of electrically conductive layers. Thereby, a relatively straightforward manner of forming the antenna is provided, where the antenna pattern of the conductive layers are sandwiched between non-conductive carrier layers. The substrate may for example be an epoxy-based laminate substrate, such as an FR4 based PCB (printed circuit board) substrate.

According to one embodiment of the invention , the substrate may advantageously comprise a glass or ceramic material having a plurality of electrically conductive layers embedded therein. A glass or ceramic material may provide improved RF-properties of the antenna, thereby improving the antenna properties for some applications.

According to one embodiment of the invention, the opening of the substrate may be a recess in the substrate. Thereby, the fingerprint sensor module can be located in the recess and the antenna can be located either below the fingerprint sensor device or encircling the fingerprint sensor device.

According to one embodiment of the invention, the opening of the substrate may be a through hole through the substrate. An opening reaching all the way through the substrate is comparatively easy to manufacture, thereby providing a simplified manufacturing process for forming the fingerprint sensor module. By arranging the fingerprint sensor device in a through opening of the substrate, the whole thickness of the substrate can be used to house the fingerprint sensor module, thereby making it possible to minimize the overall thickness of the substrate.

According to one embodiment of the invention, the fingerprint sensor device may comprises at last one connection pad located adjacent to the sensing array, and wherein the fingerprint sensor device is electrically connected to the antenna via the connection pads. One or more connection pads of the fingerprint sensor device are advantageously formed simultaneously with top metal layer of electrically conductive sensing structures of a sensing array in a capacitive fingerprint sensor device. Thereby, the connection pads can be located in the same plane as the sensing array.

According to one embodiment of the invention, the electrical connection between the connection pad of the fingerprint sensor device and the antenna may be formed as a conductive trace located in the same plane as the connection pad. Thereby, a planar electrical connection can be formed between the connection pad and a corresponding connection location of the antenna, which is preferably also located in the same plane as the fingerprint sensor connection pad.

According to one embodiment of the invention, the fingerprint sensor module may further comprise a via connection in the substrate, wherein the connection pad is electrically connected to the antenna by means of the via connection. Thereby, the antenna itself may be embedded within the substrate with the via connection acting as the conductive path connection the fingerprint sensor device to the antenna.

According to one embodiment of the invention, the substrate may comprise at least one substrate connection pad for electrically connecting the fingerprint sensor module to external circuitry. The substrate connection pad may be located on either side of the substrate, and it is also possible that the substrate, and thereby the fingerprint sensor module, has a T-shaped profile to facilitate mounting of the fingerprint sensor module in a correspondingly shaped opening of a smart card, in which case the connection pad of the substrate may be located on the lower sides of the protruding portions of the T-shaped substrate.

The described fingerprint sensor module may also comprise additional electronic components, including both active and passive components, which may be associated with functionality of the fingerprint sensor device.

There is also provided a smart card comprising a fingerprint sensor module according to any one of the aforementioned embodiments, wherein the fingerprint sensor module is arranged in an opening of the smart card and electrically connected to smart card circuitry by means of the substrate connection pad.

According to one embodiment of the invention, the substrate opening may be an opening through the substrate, the method further comprising: arranging the substrate on a carrier; arranging the fingerprint sensor module on the carrier in the substrate opening with the sensing array facing the carrier; depositing a mold material covering a backside of the fingerprint sensor device and a backside of the substrate to mechanically attach the fingerprint sensor device to the substrate; removing the carrier; and forming an electrical connection between a connection pad located on the fingerprint sensor device adjacent to the sensing array and the antenna. The carrier may for example be an adhesive tape which may comprise PI, PET or any other similar polymer. The carrier may also be a glass or silicon wafer or plate that is coated with adhesive glue. The adhesiveness of this carrier can be later reset by UV light, thermal or mechanical sliding method. This is sometimes referred to as bonding and de-bonding technology where a device is attached to and subsequently removed from a carrier.

According to one embodiment of the invention, the substrate opening may be a recess in the substrate. The method further comprising: arranging the fingerprint sensor module in the substrate recess; depositing a mold material surrounding filling a space between the fingerprint sensor device and the sidewalls of the substrate recess to mechanically attach the fingerprint sensor device to the substrate; and forming an electrical connection between a connection pad located on the fingerprint sensor device adjacent to the sensing array and the antenna.

According to one embodiment of the invention the electrical connection between the fingerprint sensor device and the antenna may advantageously be formed in a redistribution layer (RDL) using a wafer-level fan-out process. Thereby, a simple way of connecting a comparatively small connection pad of the fingerprint sensor device to a potentially larger connection pad of the antenna is provided.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Figs. 1A-B schematically illustrate a fingerprint sensor module according to an embodiment of the invention;
Fig. 2 is flow chart outlining the general steps of method for manufacturing a fingerprint sensor module according to an embodiment of the invention;
Figs. 3A-E schematically illustrate steps of method for manufacturing a fingerprint sensor module according to an embodiment of the invention;
Fig. 4 schematically illustrates a fingerprint sensor module according to an embodiment of the invention;
Fig. 5 is flow chart outlining the general steps of method for manufacturing a fingerprint sensor module according to an embodiment of the invention;
Figs. 6A-C schematically illustrate steps of method for manufacturing a fingerprint sensor module according to an embodiment of the invention; and
Fig. 7 schematically illustrate a smartcard comprising a fingerprint sensor module according to an embodiment of the invention.

### Detailed Description of Example Embodiments

In the present detailed description, various embodiments of the system and method according to the present invention are mainly described with reference to a capacitive fingerprint sensor device. However, various embodiments of the invention are equally applicable also to other types of fingerprint sensors, such as optical, ultrasound and thermal fingerprint sensors.

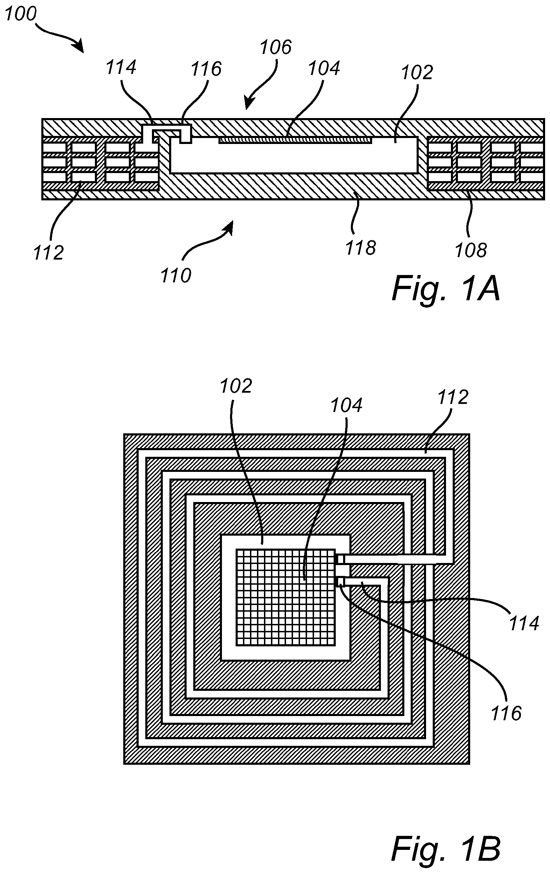

Fig. 1A schematically illustrates a side view of a fingerprint sensor module 100 according to an embodiment of the invention. The fingerprint sensor module 100 comprises a fingerprint sensor device 102 which in turn comprises a sensing array 104 consisting of a plurality of sensing elements. The sensor device 102 is configured to acquire an image of a finger placed on a sensing surface 106 of the fingerprint sensor module 100. In a capacitive finger sensor device 102, each sensing element comprises an electrically conductive structure and associated detection circuitry connected to the electrically conductive structure and configured to acquire a signal proportional to the capacitive coupling between each sensing structure and a finger placed on the sensing surface 106 of the fingerprint sensor module 100.

The fingerprint sensor module 100 further comprises a substrate 108 comprising an opening 110, and the fingerprint sensor device 102 is arranged in the opening 110 of the substrate 108. The substrate 108 further comprises an electrically conductive antenna 112 embedded in the substrate 108, the antenna 110 being electrically connected to the fingerprint sensor device 102. Here, the electrical connection 114 between the antenna and the fingerprint sensor device 102 is a conductive trace 114 connecting the antenna 112 to a connection pad 116 of the fingerprint sensor device 102, located on the same side of the fingerprint sensor device 102 as the sensing array 104. However, it is also possible to form an electrical connection to the fingerprint sensor device 102 on the opposite side, i.e. the backside, of the fingerprint sensor device 102.

As illustrated in Fig. 1A and in the top view of the of the fingerprint sensor module of Fig. 1B, the antenna 112 is arranged to surround the opening 110 of the substrate 108. Moreover, the antenna 112 is comprises antenna loops arranged in parallel in several layers of the substrate 108. The substrate may for example be a laminate substrate 108 where the antenna is located between layers of the laminate substrate 108. The substrate 108 may for example be a PCB substrate 108. However, it is also possible to provide an antenna in only one layer of the substrate 108.

The opening 110 of the substrate is a through opening reaching all the way through the substrate 108 and the fingerprint sensor device 102 is held in place by means of a mold material 118, an encapsulant or any other suitable filling material.

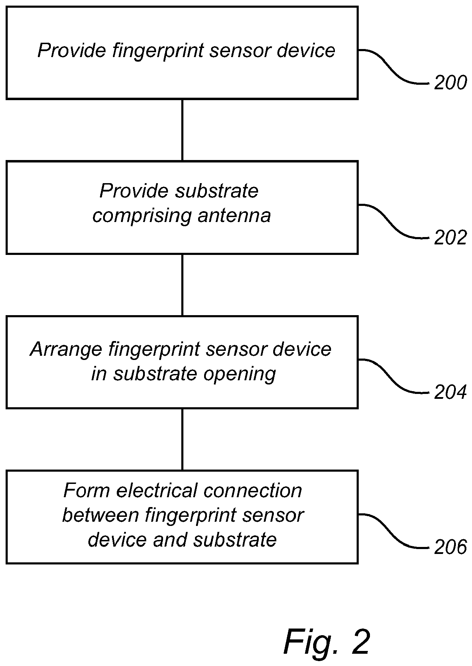

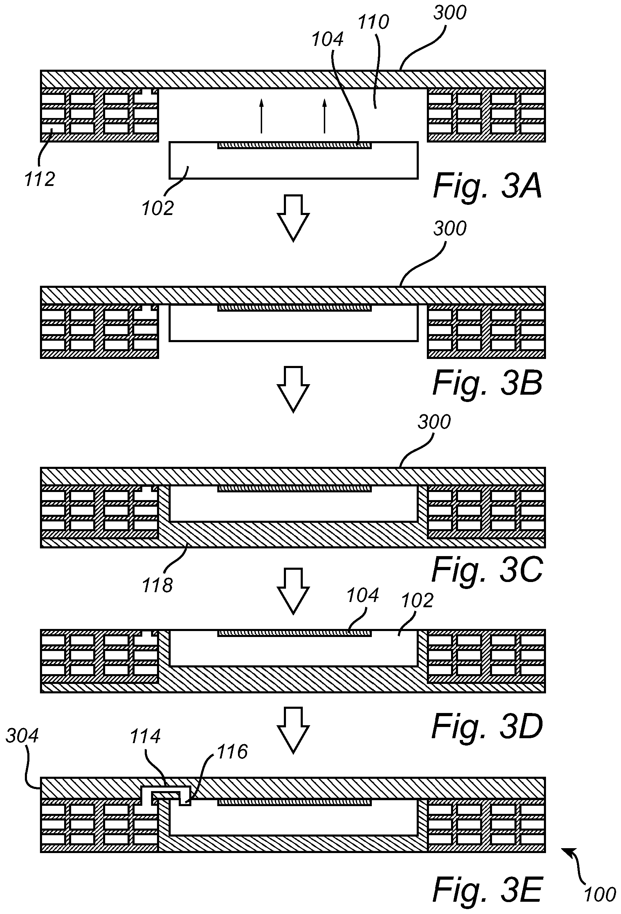

Fig. 2 is a flow chart outlining the general steps of a method for manufacturing fingerprint sensor module 100 according to an embodiment of the invention. The flow chart of Fig. 2 will be discussed with further reference to Figs. 3A.C illustrating selected steps of a method for manufacturing the fingerprint sensor module 100.

The method comprises providing 200 a fingerprint sensor device 102 as described above in relation to Fig. 1A. A substrate 108 comprising an antenna 112 embedded in the substrate 108 is provided 202. The substrate is arranged on a carrier 300 such as an adhesive tape a wafer carrier, a plate carrier or the like as illustrated in Fig. 3A. The substrate 108 comprises an opening 110 for receiving the fingerprint sensor device 102.

The method further comprises arranging 204 the fingerprint sensor device 102 in the opening 110 as illustrated in Fig. 3B. Next, illustrated in Fig. 3C, a mold material 118 is deposited in the opening 110 to protect and to hold the fingerprint sensor device 102 in place in the substrate opening 110.

In the following step, illustrated in Fig 3D, the carrier 300 is removed, or the fingerprint sensor module is removed from the carrier 300 such that the surface of the fingerprint sensor device 102 is exposed. This enables the formation 206 of an electrical connection 114 between the antenna 112 of the substrate 108 and connection pads 116 fingerprint sensor device 102 as illustrated in Fig. 3E. The electrical connection 114 may be formed directly between the fingerprint sensor device 102 and the antenna 112. It is also possible to connect the fingerprint sensor device 102 to routing circuitry or intermediate connection pads of the substrate which in turn are electrically connected to the antenna 112. The electrical connection 114 may be formed using metal electroplating or any other known metal deposition method. Moreover, the electrical connection between the fingerprint sensor device 102 and the antenna 112 may be located on the backside of the fingerprint sensor device 102 where a via connection may be provided to reach through the fingerprint sensor device 102.

Thereby, the fingerprint sensor device 102 is electrically connected to the antenna 112 such that the fingerprint sensor device 102 for example can receive energy received by the antenna 112.

Fig. 3E further illustrates depositing a protective layer 304 to cover the top surface of the fingerprint sensor module 100. It should be noted that the protective layer 304 may comprise an encapsulant or a coating. The protective layer 301 may further comprise a plurality of layers, such as an adhesive, a pigment layer, a dielectric layer and a top surface coating. The fingerprint sensor module 100 may also comprise a protective plate in the form of a glass or ceramic plate. Thereby, the fingerprint sensor module 100 is completed and ready form arranging in a device such as a smartcard.

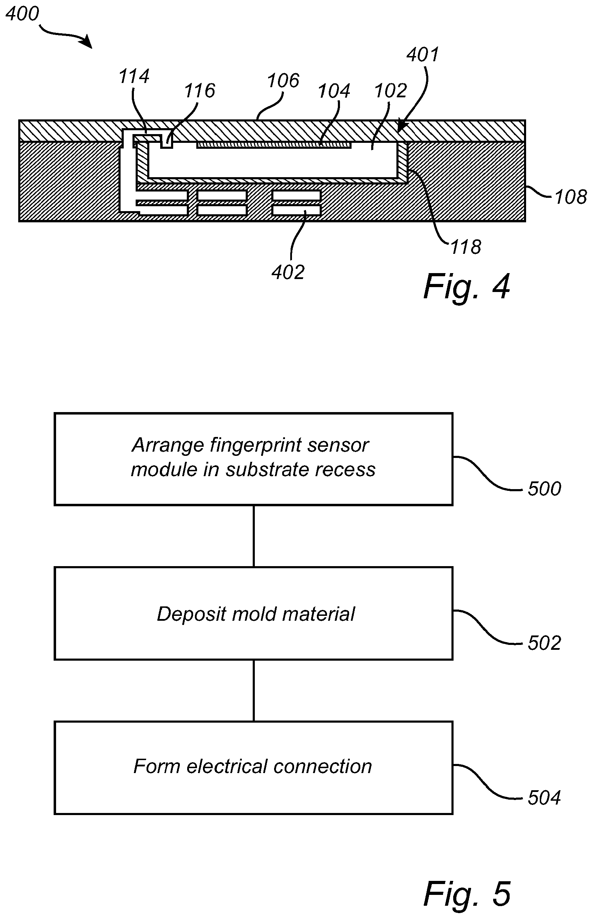

Fig. 4 schematically illustrates a fingerprint sensor module 400 according to an embodiment of the invention where the fingerprint sensor device 102 is arranged in a recess 401 of the substrate 108. The opening 401 in the substrate 108 is thereby not a through opening. Accordingly, the opening 401 should be seen as the portion of the substrate where substrate material has been removed to house the fingerprint sensor device 102. It is also possible to directly form a substrate 108 having the desired opening 110, 401. Moreover, the antenna 402 is here located underneath the fingerprint sensor device 102. This allows for the overall size of the fingerprint sensor module 400 to be reduced compared to if an antenna is arranged to encircle the fingerprint sensor device 102. However, it is equally well possible to arrange an antenna to encircle the fingerprint sensor device 102, even if the fingerprint sensor device 102 is located in a recess 401 and not in a through opening.

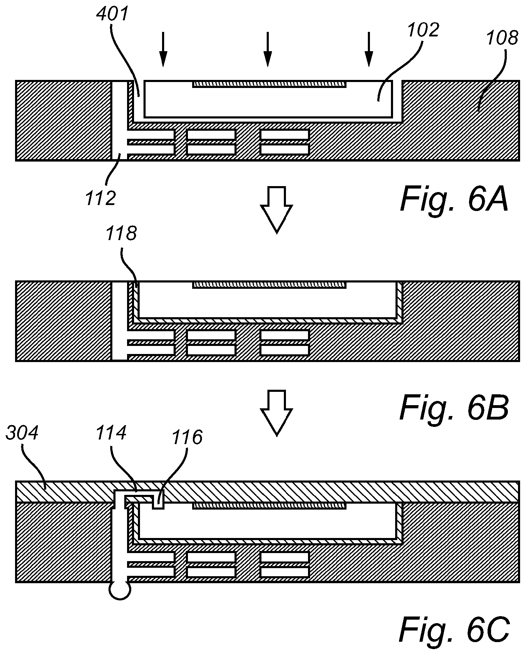

Fig. 5 is flow chart outlining the general steps of method for manufacturing a fingerprint sensor module 400 as illustrated in Fig. 4. The method will be discussed with further reference to Figs. 6A-C illustrating selected steps of the method.

The method illustrated in Figs. 6A-C is in many parts similar to the method discussed above with reference to Fig. 2 and Figs. 3A-E. First, a substrate 108 comprising an opening in the form of a recess 401 is provided. The fingerprint sensor device 102 is then arranged 500 in the substrate recess 401 as illustrated in Fig. 6A. Next, illustrated in Fig. 6B, a mold material 118 is deposited 502 to surround the fingerprint sensor device 102 and to fill a space between the fingerprint sensor device 102 and the sidewalls of the substrate recess 401, thereby mechanically attaching the fingerprint sensor device 102 to the substrate 108.

In the next step, illustrated in Fig. 6C, an electrical connection 114 is formed 504 between a connection pad 116 located on the fingerprint sensor device 102 adjacent to the sensing array and a corresponding connection pad of the substrate which connects the fingerprint sensor device 102 to the antenna 402. Finally, a protective layer 304 is deposited to cover the fingerprint sensor device 102 and the substrate 108. Fig. 6C also illustrates a bump on the backside of the fingerprint sensor module, i.e. a substrate connection pad, for connecting to external circuitry.

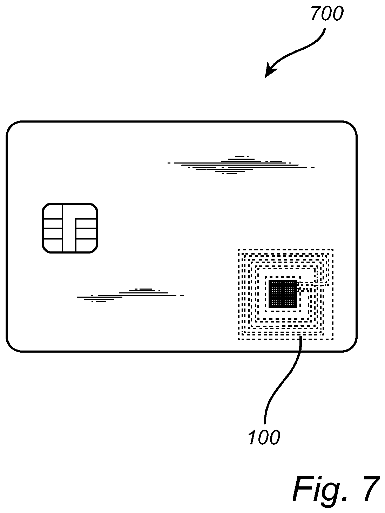

Fig. 7 schematically illustrates a smart card 700 comprising a fingerprint sensor module 100 arranged in an opening of the smartcard 700. The fingerprint sensor module 100 is communicatively coupled to integrated circuitry of the smartcard 700 so that an identity of a user can be verified. The opening of the smart card 700 may be a through opening or a recess. Moreover, the opening may have T-shaped profile and the fingerprint sensor module 100, 400 may have a corresponding T-shaped profile to fit into the T-shaped opening of the smart card 700, thereby simplifying an assembly process.

## Claims

1. A smart card (700) comprising an integrated fingerprint sensor module (100, 400), the fingerprint sensor module comprising:
a fingerprint sensor device (102) comprising a sensing array (104) consisting of a plurality of sensing elements, the sensor device being configured to acquire an image of a finger placed on a sensing surface of the fingerprint sensor module,
the smart card being **characterized in that**
the fingerprint sensor module further comprises;
a substrate (108) comprising an opening (110, 401);
wherein the fingerprint sensor device is arranged in the opening of the substrate such that the fingerprint sensor device and the substrate form a fingerprint sensor module, and
wherein the substrate comprises an antenna (112, 402) embedded in the substrate, the antenna being electrically connected to the fingerprint sensor device, and
wherein the fingerprint sensor module is located in an opening of the smart card.

2. The smart card according to claim 1, wherein the antenna is arranged to encircle the opening comprising the fingerprint sensor device.

3. The smart card according to claim 1, wherein the antenna is arranged on a side of the fingerprint sensor device opposite the side comprising the sensing array.

4. The smart card according to any one of the preceding claims, wherein the substrate comprises a plurality of conductive layers, and wherein the antenna is formed in said plurality of conductive layers of the substrate.

5. The smart card according to any one of claims 1 to 3, wherein the substrate is a laminate substrate comprising a plurality of carrier layers interspaced with a plurality of electrically conductive layers.

6. The smart card according to any one of the preceding claims, wherein the fingerprint sensor device comprises at last one connection pad (116) located adjacent to the sensing array, and wherein the fingerprint sensor device is electrically connected to the antenna via the connection pad.

7. The smart card according to claim 6, wherein the electrical connection between the connection pad of the fingerprint sensor device and the antenna is formed as a conductive trace (114) located in the same plane as the connection pad.

8. The smart card according to claim 7, wherein the connection pad is located in the same plane as the sensing array.

9. The smart card according to any one of claims 6 to 8, further comprising a via connection in said substrate, wherein the connection pad is electrically connected to the antenna by means of the via connection.

10. The smart card according to any one of the preceding claims, wherein the substrate comprises substrate connection pads for electrically connecting the fingerprint sensor module to external circuitry.

11. A smart card (700) according to any one of the preceding claims, wherein the fingerprint sensor module is electrically connected to smart card circuitry by means of a substrate connection pad.

12. A method for manufacturing a smart card comprising a fingerprint sensor module (100, 400) integrated in the smart card, the method comprising:
providing (200) a fingerprint sensor device (102) comprising a sensing array (104) consisting of a plurality of sensing elements, the sensor device being configured to acquire an image of a finger placed on a sensing surface of the fingerprint sensor module;
the method being **characterized by**
providing (202) a substrate (108) comprising an antenna (112, 402) embedded in the substrate, the substrate further comprising an opening (110) for receiving the fingerprint sensor device;
arranging (204) the fingerprint sensor device in the opening;
forming (206) an electrical connection between the fingerprint sensor device and the antenna to form a fingerprint sensor module comprising the substrate and the fingerprint sensor device; and
arranging the fingerprint sensor module in an opening of the smart card.

13. The method according to claim 12, wherein the substrate opening is an opening through the substrate, the method further comprising:
arranging the substrate on a carrier (300);
arranging the fingerprint sensor device on the carrier in the substrate opening with the sensing array facing the carrier;
depositing a mold material (118) covering a backside of the fingerprint sensor device and a backside of the substrate to mechanically attach the fingerprint sensor device to the substrate;
removing the carrier; and
forming an electrical connection (114) between a connection pad (116) located on the fingerprint sensor device adjacent to the sensing array and the antenna.

14. The method according to claim 12, wherein the substrate opening is a recess (401) in the substrate, the method further comprising:
arranging (500) the fingerprint sensor device in the substrate recess;
depositing (502) a mold material (118) surrounding filling a space between the fingerprint sensor device and the sidewalls of the substrate recess to mechanically attach the fingerprint sensor device to the substrate; and
forming (504) an electrical connection (114) between a connection pad (116) located on the fingerprint sensor device adjacent to the sensing array and the antenna.

## Patentansprüche

1. Chipkarte (700), die ein integriertes Fingerabdrucksensormodul (100, 400) umfasst, wobei das Fingerabdrucksensormodul umfasst:
eine Fingerabdrucksensorvorrichtung (102), die ein Abfühl-Array (104) umfasst, das aus mehreren Abfühlelementen besteht, wobei die Sensorvorrichtung dafür konfiguriert ist, ein Bild eines Fingers zu erfassen, der auf eine Abfühlfläche des Fingerabdrucksensormoduls gelegt wird,
wobei die Chipkarte **dadurch gekennzeichnet ist, dass** das Fingerabdrucksensormodul des Weiteren umfasst:
ein Substrat (108), das eine Öffnung (110, 401) umfasst;
wobei die Fingerabdrucksensorvorrichtung so in der Öffnung des Substrats angeordnet ist, dass die Fingerabdrucksensorvorrichtung und das Substrat ein Fingerabdrucksensormodul bilden, und
wobei das Substrat eine in das Substrat eingebettete Antenne (112, 402) umfasst, wobei die Antenne elektrisch mit der Fingerabdrucksensorvorrichtung verbunden ist, und
wobei sich das Fingerabdrucksensormodul in einer Öffnung der Chipkarte befindet.

2. Chipkarte nach Anspruch 1, wobei die Antenne so angeordnet ist, dass sie die Öffnung mit der Fingerabdrucksensorvorrichtung umgibt.

3. Chipkarte nach Anspruch 1, wobei die Antenne auf einer Seite der Fingerabdrucksensorvorrichtung angeordnet ist, die der Seite gegenüber liegt, die das Abfühl-Array umfasst.

4. Chipkarte nach einem der vorangehenden Ansprüche, wobei das Substrat mehrere leitfähige Schichten umfasst, und wobei die Antenne in den mehreren leitfähigen Schichten des Substrats ausgebildet ist.

5. Chipkarte nach einem der Ansprüche 1 bis 3, wobei das Substrat ein Laminatsubstrat ist, das mehrere Trägerschichten umfasst, zwischen die mehrere elektrisch leitfähige Schichten eingefügt sind.

6. Chipkarte nach einem der vorangehenden Ansprüche, wobei die Fingerabdrucksensorvorrichtung mindestens eine Verbindungskontaktstelle (116) umfasst, die sich neben dem Abfühl-Array befindet, und wobei die Fingerabdrucksensorvorrichtung über die Verbindungskontaktstelle elektrisch mit der Antenne verbunden ist.

7. Chipkarte nach Anspruch 6, wobei die elektrische Verbindung zwischen der Verbindungskontaktstelle der Fingerabdrucksensorvorrichtung und der Antenne als eine Leiterbahn (114) ausgebildet ist, die sich in derselben Ebene wie die Verbindungskontaktstelle befindet.

8. Chipkarte nach Anspruch 7, wobei sich die Verbindungskontaktstelle in derselben Ebene wie das Abfühl-Array befindet.

9. Chipkarte nach einem der Ansprüche 6 bis 8, die des Weiteren eine Durchkontaktierungsverbindung in dem Substrat umfasst, wobei die Verbindungskontaktstelle mittels der Durchkontaktierungsverbindung elektrisch mit der Antenne verbunden ist.

10. Chipkarte nach einem der vorangehenden Ansprüche, wobei das Substrat Substratverbindungskontaktstellen zum elektrischen Verbinden des Fingerabdrucksensormoduls mit externen Schaltungen umfasst.

11. Chipkarte (700) nach einem der vorangehenden Ansprüche, wobei das Fingerabdrucksensormodul mittels einer Substratverbindungskontaktstelle elektrisch mit der Chipkartenschaltung verbunden ist.

12. Verfahren zur Herstellung einer Chipkarte, die ein in die Chipkarte integriertes Fingerabdrucksensormodul (100, 400) umfasst, wobei das Verfahren umfasst:
Bereitstellen (200) einer Fingerabdrucksensorvorrichtung (102), die ein Abfühl-Array (104) umfasst, das aus mehreren Abfühlelementen besteht, wobei die Sensorvorrichtung dafür konfiguriert ist, ein Bild eines Fingers zu erfassen, der auf eine Abfühlfläche des Fingerabdrucksensormoduls gelegt wird;
wobei das Verfahren **gekennzeichnet ist durch**:
Bereitstellen (202) eines Substrats (108), das eine in das Substrat eingebettete Antenne (112, 402) umfasst, wobei das Substrat des Weiteren eine Öffnung (110) zum Aufnehmen der Fingerabdrucksensorvorrichtung umfasst;
Anordnen (204) der Fingerabdrucksensorvorrichtung in der Öffnung;
Bilden (206) einer elektrischen Verbindung zwischen der Fingerabdrucksensorvorrichtung und der Antenne, um ein Fingerabdrucksensormodul zu bilden, das das Substrat und die Fingerabdrucksensorvorrichtung umfasst; und
Anordnen des Fingerabdrucksensormoduls in einer Öffnung der Chipkarte.

13. Verfahren nach Anspruch 12, wobei die Substratöffnung eine Öffnung durch das Substrat hindurch ist, wobei das Verfahren des Weiteren umfasst:
Anordnen des Substrats auf einem Träger (300);
Anordnen der Fingerabdrucksensorvorrichtung auf dem Träger in der Substratöffnung, wobei das Abfühl-Array dem Träger zugewandt ist;
Aufbringen eines Vergussmaterials (118), das eine Rückseite der Fingerabdrucksensorvorrichtung und eine Rückseite des Substrats bedeckt, um die Fingerabdrucksensorvorrichtung mechanisch an dem Substrat anzubringen;
Entfernen des Trägers; und
Bilden einer elektrischen Verbindung (114) zwischen einer Verbindungskontaktstelle (116), die sich auf der Fingerabdrucksensorvorrichtung neben dem Abfühl-Array befindet, und der Antenne.

14. Verfahren nach Anspruch 12, wobei die Substratöffnung eine Aussparung (401) in dem Substrat ist, wobei das Verfahren des Weiteren umfasst:
Anordnen (500) der Fingerabdrucksensorvorrichtung in der Substrataussparung;
Aufbringen (502) eines Vergussmaterials (118), das einen Raum zwischen der Fingerabdrucksensorvorrichtung und den Seitenwänden der Substrataussparung umgibt und ausfüllt, um die Fingerabdrucksensorvorrichtung mechanisch an dem Substrat anzubringen; und
Bilden (504) einer elektrischen Verbindung (114) zwischen einer Verbindungskontaktstelle (116), die sich auf der Fingerabdrucksensorvorrichtung neben dem Abfühl-Array befindet, und der Antenne.

## Revendications

1. Carte à puce (700) comprenant un module de capteur d'empreinte digitale (100, 400) intégré, le module de capteur d'empreinte digitale comprenant :
un dispositif de capteur d'empreinte digitale (102) comprenant un réseau de détection (104) se composant d'une pluralité d'éléments de détection, le dispositif de capteur étant configuré pour acquérir une image d'un doigt placé sur une surface de détection du module de capteur d'empreinte digitale,
la carte à puce étant **caractérisée en ce que** le module de capteur d'empreinte digitale comprend en outre :
un substrat (108) comprenant une ouverture (110, 401) ;
dans laquelle le dispositif de capteur d'empreinte digitale est agencé dans l'ouverture du substrat de sorte que le dispositif de capteur d'empreinte digitale et le substrat constituent un module de capteur d'empreinte digitale, et
dans laquelle le substrat comprend une antenne (112, 402) intégrée au substrat, l'antenne étant électriquement connectée au dispositif de capteur d'empreinte digitale, et
dans laquelle le module de capteur d'empreinte digitale est situé dans une ouverture de la carte à puce.

2. Carte à puce selon la revendication 1, dans laquelle l'antenne est agencée pour encercler l'ouverture comprenant le dispositif de capteur d'empreinte digitale.

3. Carte à puce selon la revendication 1, dans laquelle l'antenne est agencée sur un côté du dispositif de capteur d'empreinte digitale à l'opposé du côté comprenant le réseau de détection.

4. Carte à puce selon l'une quelconque des revendications précédentes, dans laquelle le substrat comprend une pluralité de couches conductrices, et dans laquelle l'antenne est constituée dans ladite pluralité de couches conductrices du substrat.

5. Carte à puce selon l'une quelconque des revendications 1 à 3, dans laquelle le substrat est un substrat stratifié comprenant une pluralité de couches de support intercalées avec une pluralité de couches électriquement conductrices.

6. Carte à puce selon l'une quelconque des revendications précédentes, dans laquelle le dispositif de capteur d'empreinte digitale comprend au moins une plage de connexion (116) située adjacent au réseau de détection, et dans laquelle le dispositif de capteur d'empreinte digitale est électriquement connecté à l'antenne via la plage de connexion.

7. Carte à puce selon la revendication 6, dans laquelle la connexion électrique entre la plage de connexion du dispositif de capteur d'empreinte digitale et l'antenne est constituée en tant qu'une trace conductrice (114) située dans le même plan que la plage de connexion.

8. Carte à puce selon la revendication 7, dans laquelle la plage de connexion est située dans le même plan que le réseau de détection.

9. Carte à puce selon l'une quelconque des revendications 6 à 8, comprenant en outre une connexion de trous d'interconnexion dans ledit substrat, dans laquelle la plage de connexion est électriquement connectée à l'antenne au moyen de la connexion de trous d'interconnexion.

10. Carte à puce selon l'une quelconque des revendications précédentes, dans laquelle le substrat comprend des plages de connexion de substrat pour connecter électriquement le module de capteur d'empreinte digitale à une circuiterie externe.

11. Carte à puce (700) selon l'une quelconque des revendications précédentes, dans laquelle le module de capteur d'empreinte digitale est électriquement connecté à une circuiterie de carte à puce au moyen d'une plage de connexion de substrat.

12. Procédé de fabrication d'une carte à puce comprenant un module de capteur d'empreinte digitale (100, 400) intégré à la carte à puce, le procédé comprenant :
la fourniture (200) d'un dispositif de capteur d'empreinte digitale (102) comprenant un réseau de détection (104) se composant d'une pluralité d'éléments de détection, le dispositif de capteur étant configuré pour acquérir une image d'un doigt placé sur une surface de détection du module de capteur d'empreinte digitale ;
le procédé étant **caractérisé par**
la fourniture (202) d'un substrat (108) comprenant une antenne (112, 402) intégrée au substrat, le substrat comprenant en outre une ouverture (110) pour recevoir le dispositif de capteur d'empreinte digitale ;
l'agencement (204) du dispositif de capteur d'empreinte digitale dans l'ouverture ;
la constitution (206) d'une connexion électrique entre le dispositif de capteur d'empreinte digitale et l'antenne pour constituer un module de capteur d'empreinte digitale comprenant le substrat et le dispositif de capteur d'empreinte digitale ; et
l'agencement du module de capteur d'empreinte digitale dans une ouverture de la carte à puce.

13. Procédé selon la revendication 12, dans lequel l'ouverture de substrat est une ouverture à travers le substrat, le procédé comprenant en outre :
l'agencement du substrat sur un support (300) ;
l'agencement du dispositif de capteur d'empreinte digitale sur le support dans l'ouverture de substrat avec le réseau de détection faisant face au support ;
le dépôt d'un matériau de moulage (118) recouvrant un côté arrière du dispositif de capteur d'empreinte digitale et un côté arrière du substrat pour raccorder mécaniquement le dispositif de capteur d'empreinte digitale au substrat ;
le retrait du support ; et
la constitution d'une connexion électrique (114) entre une plage de connexion (116) située sur le dispositif de capteur d'empreinte digitale adjacent au réseau de détection et l'antenne.

14. Procédé selon la revendication 12, dans lequel l'ouverture de substrat est un évidement (401) dans le substrat, le procédé comprenant en outre :
l'agencement (500) du dispositif de capteur d'empreinte digitale dans l'évidement de substrat ;
le dépôt (502) d'un matériau de moulage (118) entourant et remplissant un espace entre le dispositif de capteur d'empreinte digitale et les parois latérales de l'évidement de substrat pour raccorder mécaniquement le dispositif de capteur d'empreinte digitale au substrat ; et
la constitution (504) d'une connexion électrique (114) entre une plage de connexion (116) située sur le dispositif de capteur d'empreinte digitale adjacent au réseau de détection et l'antenne.
